# EUROPÄISCHE PATENTANMELDUNG

(11) **EP 2 412 509 A1**
(43) Veröffentlichungstag der Anmeldung: **01.02.2012**
(21) Anmeldenummer: 11175976.7
(22) Anmeldetag: 29.07.2011
(51) Int. Cl.: B29C 47/06, B29C 47/86, B29C 47/92, B29C 47/56

(54) **Koextrusionsdüse mit thermisch entkoppelten Werkstoffkanälen**

(30) Priorität: 29.07.2010 DE 102010036738
(71) Anmelder: aluplast GmbH, 76227 Karlsruhe (DE)
(72) Erfinder: Englender, Claude, 67930 Beinheim (DE); Schaaf, Alexander, 76437 Rastatt (DE); Mölter, Ben, 76474 Au am Rhein (DE); Krell, Rüdiger, 76307 Karsbad-Auerbach (DE); Mosquera, Alfonso, 67660 Betschdorf (DE); Heilig, Andreas, 76676 Graben-Neudorf (DE)
(74) Vertreter: Stoffregen, Hans-Herbert

(57) **Zusammenfassung**

Die Erfindung bezieht sich auf eine Extrusionswerkzeugdüse (10) zum Co-Extrudieren von Werkstoffen mit voneinander abweichenden Verarbeitungstemperaturen mit innerhalb der Extrusionswerkzeugdüse (10) verlaufendem zumindest einem ersten (22) und zumindest einem zweiten (24,26) Werkstoffkanal für die in ihrer Verarbeitungstemperatur voneinander abweichenden Werkstoffe. Damit Werkstoffe, deren Verarbeitungstemperaturen vorzugsweise mehr als 10°C voneinander abweichen, kombiniert werden können, wobei grundsätzlich eine beliebige Werkstoffanordnung in dem extrudierten Gegenstand möglich sein soll, ist vorgesehen, dass der zumindest eine erste Werkstoffkanal (22) von dem zumindest einen zweiten Werkstoffkanal (24,26) thermisch entkoppelt ist.

## Beschreibung

Die Erfindung bezieht sich auf eine Extrusionswerkzeugdüse zum Co-Extrudieren von Werkstoffen mit voneinander abweichenden Verarbeitungstemperaturen mit innerhalb der Extrusionswerkzeugdüse verlaufenden zumindest einem ersten und zumindest einem zweiten Werkstoffkanal für die unterschiedlichen Werkstoffe.

Es ist bekannt, gleichartige Werkstoffe, insbesondere mit gleichen Verarbeitungstemperaturen, aber auch mit ähnlichen rheologischen Eigenschaften, in Co-Extrusionsdüsen (CoEx-Düsen) für einen Extrusionsprozess zusammenzufügen.

Entsprechende Extrusionswerkzeuge weisen neben einer Anschlussmöglichkeit für einen Hauptextruder eine weitere Anschlussmöglichkeit für einen oder mehrere Co-Extruder auf. Die in den Extrusionswerkzeugdüsen geführten Materialien werden zunächst in separaten Werkstoffkanälen geführt, um sodann früher oder später zusammengeführt zu werden.

Bei der Kern-Co-Extrusion berühren sich die unterschiedlichen Materialien nur an expliziten Fügestellen, wohingegen bei einer Flächen-Co-Extrusion die unterschiedlichen Materialien mehrlagig übereinander in der Bauteilwandung angeordnet werden und großflächige Fügezonen aufweisen.

Entsprechende Co-Extrusionsdüsen bestehen aus einem geeigneten Material, in dem die Werkstoffkanäle ausgebildet werden können und das geeignet ist, die Verarbeitungstemperatur konstant und homogen zu halten. Das Material muss eine gute Wärmeleitung aufweisen.

Es ist auch bekannt, Werkstoffe mit unterschiedlichen Verarbeitungstemperaturen mit speziellen Werkzeugen zu kombinieren. Üblicherweise wird einer der Werkstoffe mit möglichst kurzem Kanal durch das Werkzeug geführt. Hierdurch soll vermieden werden, dass die unterschiedlichen Verarbeitungstemperaturen den parallelen Prozess beeinflussen. Dabei ist es unerheblich, ob der zugeführte Werkstoff eine höhere oder eine niedrigere Temperatur aufweist.

Werkzeuge mit gleichartigen Werkstoffen können aufgrund der guten Wärmeleitung der Werkstoffe mit einer Verarbeitungstemperaturdifferenz < 10 °C kombiniert werden. Verbundkonstruktionen werden hierdurch deutlich erschwert, so dass in der Praxis lediglich die Kombination Polymerwerkstoff wie PVC mit faserverstärktem Polymerwerkstoff wie PVC-GF extrudiert wird.

Sollen Werkstoffe mit unterschiedlichen Verarbeitungstemperaturen extrudiert werden, werden die konstruktiven Freiheiten für die extrudierbaren Profile stark eingeschränkt. Der Zusatzwerkstoff muss stets an den Randbereichen des Profils angeordnet werden, da der Werkstoff- bzw. Zuführkanal anderenfalls zu lang wird. Eine Anordnung im Profilinnenbereich ist grundsätzlich nicht möglich.

Der vorliegenden Erfindung liegt die Aufgabe zu Grunde, eine Extrusionswerkzeugdüse derart weiterzubilden, dass Werkstoffe, deren Verarbeitungstemperaturen vorzugsweise mehr als 10 °C voneinander abweichen, kombiniert werden können, wobei grundsätzlich eine beliebige Werkstoffanordnung in dem extrudierten Gegenstand möglich sein soll. Insbesondere soll die Möglichkeit gegeben sein, ein erstes Kunststoffmaterial und ein zweites Kunststoffmaterial zu co-extrudieren, bei denen die Temperaturdifferenz ΔT zwischen den Schmelztemperaturen beträgt ΔT > 10°C, insbesondere 10°C < ΔT < 50°C, vorzugsweise 40°C ≤ ΔT ≤ 50 °C.

Zur Lösung der Aufgabe wird im Wesentlichen vorgesehen, dass der zumindest eine Werkstoffkanal thermisch von dem zumindest einen zweiten Werkstoffkanal entkoppelt ist. Dabei ist insbesondere vorgesehen, dass die thermische Entkopplung durch einen Luftspalt oder durch eine Isolation aus wärmebeständigem Werkstoff erfolgt.

Insbesondere zeichnet sich die Erfindung dadurch aus, dass im Hauptbereich der Extrusionswerkzeugdüse zumindest ein Einsatz einsetzbar ist, der mittels integrierter Heiz- und/oder Kühlmechanismen temperierbar ist. Dabei verläuft in dem zumindest einen Einsatz zumindest ein Abschnitt eines der Werkstoffkanäle.

Die erfindungsgemäße Extrusionswerkzeugdüse zeichnet sich durch thermisch voneinander entkoppelte Werkstoffkanäle aus. Hierzu kann ein hochwärmebeständiger Werkstoff zur Isolation verwendet oder die thermische Trennung z. B. durch einen Luftspalt erreicht werden.

Das Werkzeug besteht aus einem Hauptbereich - ähnlich dem klassischen Werkzeugaufbau - . Dieser kann von außen beeinflusst werden, insbesondere durch Kühlgebläse oder Heizmanschetten. Der eingesetzte Bereich wird durch die thermische Trennung davon nicht oder nur unwesentlich beeinflusst. Weitere Bereiche im Werkzeug, die Einsätze sind, zeichnen sich dadurch aus, dass diese im Wesentlichen in dem Hauptbereich eingesetzt sind und durch integrierte Heiz- und Kühlmechanismen temperiert werden. Der Hauptbereich wird durch thermische Trennung davon nicht beeinflusst.

Eine Temperierung von einem oder mehreren Werkstoffkanälen kann auch durch Flüssiggas wie Flüssigstickstoff erfolgen. Dieses kann zwischen gegeneinander thermisch isolierten Bereichen der Extrusionswerkzeugdüse bzw. dessen Körpers strömen, so dass einzelne Bereiche im erforderlichen Umfang isoliert voneinander temperiert werden können.

Erfindungsgemäß besteht die Möglichkeit, durch thermische Isolierung einzelner Bereiche der Extrusionswerkzeugdüse Materialien unterschiedlicher Verarbeitungstemperaturen im Bereich zwischen vorzugsweise 150 °C und 300 °C durch die Extrusionswerkzeugdüse in thermisch voneinander isolierten Werkstoffkanälen zu drücken, ohne dass die jeweilige Bearbeitungstemperatur derart beeinflusst wird, dass das Extrudat den Materialanforderungen nicht genügt. Die Differenz zwischen den Schmelztemperaturen kann ohne Weiteres zwischen 10 °C und 50 °C, insbesondere zwischen 40 °C und 50 °C liegen.

Insbesondere ist vorgesehen, dass der von dem Werkstoff höherer Verarbeitungstemperatur durchflossene Kanal thermisch von der Co-Extrusionsdüse bzw. dem von dem Material niedrigerer Verarbeitungstemperatur durchflossene Kanal entkoppelt ist. Mit anderen Worten ist der entsprechende Kanal von einer thermischen Isolierung umgeben, so dass die Co-Extrusionsdüse bzw. der weitere Kanal von der Temperatur des die höhere Verarbeitungstemperatur aufweisenden Werkstoffs nicht beeinflusst wird.

Zum Extrudieren komplexer Profile wie Fensterprofile sieht die Erfindung insbesondere vor, dass der von dem Werkstoff höherer Verarbeitungstemperatur durchflossene Kanal sich in Projektion in Richtung der Längsachse der Co-Extrusionsdüse über eine Länge L innerhalb von von dem Werkstoff niedrigerer Verarbeitungstemperatur umgebenen Raum der Co-Extrusionsdüse erstreckt mit LD ≥ L ≥ 0,3 L_{D} mit L_{D} gleich Länge der Co-Extrusionsdüse. Dabei ist die Länge der Co-Extrusionsdüse der Abstand zwischen rückseitig verlaufendem Extruderflansch und düsenseitiger Stirnfläche des Co-Extrusionskörpers.

Weitere Einzelheiten, Vorteile und Merkmale der Erfindung ergeben sich nicht nur aus den Ansprüchen, den diesen zu entnehmenden Merkmalen -für sich und/oder in Kombination -, sondern auch aus der nachfolgenden Beschreibung eines der Beschreibung zu entnehmenden bevorzugten Ausführungsbeispiels.

Es zeigen:
- Fig. 1: eine Vorderansicht einer Co-Extrusionsdüse und
- Fig. 2: eine Draufsicht auf die Co-Extrusionsdüse gemäß Fig. 1, teilweise weggebrochen.

Den Figuren sind rein prinzipiell verschiedene Ansichten einer Co-Extrusionsdüse 10 zu entnehmen, die in gewohnter Weise aus mehreren Düsenplatten oder -segmenten 12, 14, 16, 18, 20 besteht, die im erforderlichen Umfang Durchgangsbohrungen aufweisen, um Werkstoffkanäle zu begrenzen.

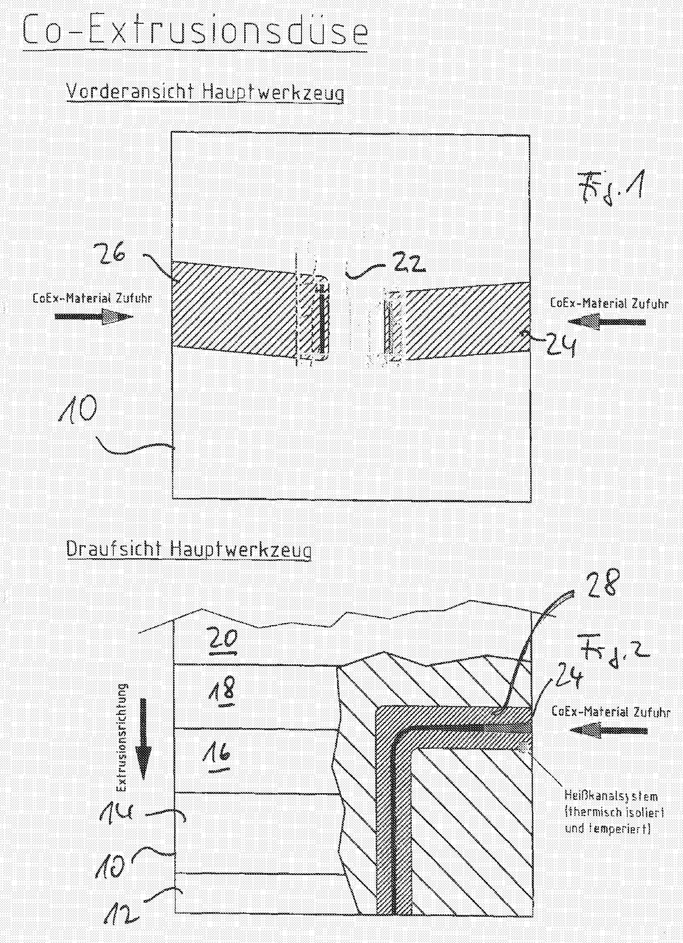

Wie sich aus der Fig. 1 ergibt, kann mit der erfindungsgemäßen Co-Extrusionsdüse ein kammerartiges Hohlprofil wie Fenster- oder Türprofil extrudiert werden, wobei ein oder mehrere erste Werkstoffkanäle mit einem Extruder verbunden sind, über den schmelzflüssiger Kunststoff wie PVC in die Co-Extrusionsdüse 10 gedrückt wird.

Um z. B. Abschnitte des mehrkammerigen Kunststoff-Hohlprofils 22 aus einem zweiten Kunststoffmaterial mit einer von dem Material des Hohlprofils 22 abweichenden, und zwar höheren Verarbeitungstemperatur auszubilden, ist erfindungsgemäß vorgesehen, dass in der Co-Extrusionsdüse 10 im Ausführungsbeispiel zwei zweite Kanäle 24, 26 verlaufen, denen der zu co-extrudierende Werkstoff, also das zweite Kunststoffmaterial wie PTB (Polybuthylenterephthalat) oder PTE (Polyethylenterephthalat) von einem Co-Extruder zugeführt wird. Das z. B. als Armierung bestimmte Material kann Verarbeitungstemperaturabweichungen zu dem Material des Hohlkammerprofils 22, bei dem es sich insbesondere um PVC als Kunststoffmaterial handeln kann, von ohne Weiteres 40 °C bis 50 °C aufweisen. Aus Gründen der Vereinfachung - ohne dass die Erfindung hierdurch eingeschränkt wird - wird das durch die nicht näher gekennzeichneten ersten Kanäle zur Bildung des Profils fließende Kunststoffmaterial nachstehend als PVC-Material bezeichnet.

Der Düsenkörper, also die die Werkstoffkanäle aufweisenden Platten 12, 14, 16, 18, 20, können im gewünschten Umfang z. B. durch Manschetten temperiert werden bzw. auf eine gewünschte Temperatur eingestellt werden, bei der die Werkstoffe extrudiert werden sollen. Hierzu wird üblicherweise der Hauptbereich des Düsenkörpers temperiert, durch den die im Ausführungsbeispiel zweiten Kanäle 24, 26 geführt werden, in der die Verarbeitungstemperatur des Werkstoffs jedoch höher als in den Kanälen liegt, in der das PVC-Material fließt. Damit das PVC-Material nicht unzulässig erwärmt wird bzw. umgekehrt, ein Abkühlen des zweiten Materials nicht erfolgt, wodurch anderenfalls ein Extrudieren nicht mehr möglich wäre, sind die zweiten Kanäle 24, 26 thermisch von dem Hauptkörper, also von dem Bereich der Co-Extrusionsdüse 10 getrennt, innerhalb dessen der oder die ersten Kanäle für das PVC-Material verlaufen. Die thermische Trennung erfolgt durch ein geeignetes Material, wobei die Werkstoffkanäle 24, 26 wiederum von einer Heizung oder sonstigen Temperiereinrichtungen umgeben sein können, um den Werkstoff auf die erforderliche Verarbeitungstemperatur zu halten bzw. vor dem Co-Extrudieren auf eine Temperatur abzukühlen, die es zulässt, dass das PVC-Material mit dem in den zweiten Kanälen 24, 26 geführte Material ohne Beschädigung des PVC co-extrudiert werden kann. Andere für die Herstellung des Hohlkammerprofils 22 verwendete Materialien kommen selbstverständlich gleichfalls in Frage.

Dabei ist insbesondere vorgesehen, dass der oder die zweiten Kanäle 24, 26 abschnittsweise innerhalb des von ersten Kanälen begrenzten Raums der Co-Extrusionsdüse 10 verlaufen. Insbesondere sollte der zumindest eine zweite Kanal 24, 26 über eine Länge - betrachtet in Projektion auf die Längsachse der Co-Extrusionsdüse 10 - von zumindest 30 % der Länge der Co-Extrusionsdüse 10 innerhalb des von ersten Kanälen umgebenen Bereichs der Co-Extrusionsdüse 10 verlaufen.

Mit anderen Worten verlaufen insbesondere bei komplexen Profilen der oder die zweiten Kanäle 22, 24 über eine erhebliche Länge der Co-Extrusionsdüse 10 innerhalb des von den ersten Kanälen begrenzten Bereichs. Somit ergeben sich extrudierte Profile mit peripheren Profilabschnitten und innerhalb des von diesen umschlossenen Raums verlaufenden Innenprofilabschnitten wie Stegen, die aus einem Material bestehen, dessen Schmelztemperatur erheblich höher als die der peripheren oder Außenprofilabschnitte sein kann, ohne dass eine unkontrollierte Temperaturbeeinflussung der Materialien untereinander erfolgen kann. Dies ist aufgrund der erfindungsgemäßen thermischen Trennung der zweiten Kanäle von den ersten Kanälen oder umgekehrt sichergestellt.

## Patentansprüche

1. Extrusionswerkzeugdüse (10) zum Co-Extrudieren von Werkstoffen mit voneinander abweichenden Verarbeitungstemperaturen mit innerhalb der Extrusionswerkzeugdüse (10) verlaufendem zumindest einem ersten und zumindest einem zweiten Werkstoffkanal für die in ihrer Verarbeitungstemperatur voneinander abweichenden Werkstoffe,
**dadurch gekennzeichnet,**
**dass** der zumindest eine erste Werkstoffkanal von dem zumindest einen zweiten Werkstoffkanal (24, 26) thermisch entkoppelt ist.

2. Extrusionswerkzeugdüse nach Anspruch 1,
**dadurch gekennzeichnet,**
**dass** die thermische Entkopplung durch einen Luftspalt oder durch eine Isolation aus wärmebeständigem Werkstoff erfolgt.

3. Extrusionswerkzeugdüse nach Anspruch 1 oder 2,
**dadurch gekennzeichnet,**
**dass** in die Extrusionswerkzeugdüse (10) bzw. dessen Hauptbereich zumindest ein Einsatz einsetzbar ist, der mittels integrierter Heiz- und/oder Kühlmechanismen temperierbar ist.

4. Extrusionswerkzeugdüse nach zumindest einem der vorhergehenden Ansprüche,
**dadurch gekennzeichnet,**
**dass** in dem zumindest einen Einsatz zumindest ein Abschnitt des ersten oder zweiten Werkstoffkanals (24, 26) verläuft.

5. Extrusionswerkzeugdüse nach zumindest einem der vorhergehenden Ansprüche,
**dadurch gekennzeichnet,**
**dass** eine Temperierung des zumindest einen ersten Werkstoffkanals oder des zumindest einen zweiten Werkstoffkanals (24) durch Flüssiggas wie Flüssigstickstoff erfolgt.

6. Extrusionswerkzeugdüse nach zumindest einem der vorhergehenden Ansprüche,
**dadurch gekennzeichnet,**
**dass** der von dem Werkstoff höherer Verarbeitungstemperatur durchflossene Kanal (22, 24) thermisch von der Co-Extrusionsdüse (10) bzw. dem von dem Material niedrigerer Verarbeitungstemperatur durchflossenen Kanal entkoppelt ist.

7. Extrusionswerkzeugdüse nach zumindest einem der vorhergehenden Ansprüche,
**dadurch gekennzeichnet,**
**dass** der von dem Werkstoff höherer Verarbeitungstemperatur durchflossene Kanal (22, 24) sich in Projektion in Richtung der Längsachse der Co-Extrusionsdüse (10) über eine Länge L innerhalb eines Bereichs erstreckt, der von von dem Werkstoff niedrigerer Verarbeitungstemperatur durchflossenen Kanälen begrenzt ist, wobei L_{D} ≥ L ≥ 0,3 L_{D}, mit L_{D} = Länge der Co-Extrusionsdüse ist.
